# EUROPEAN PATENT APPLICATION

(11) **EP 4 350 871 A1**
(43) Date of publication of application: **10.04.2024**
(21) Application number: 23201312.8
(22) Date of filing: 02.10.2023
(51) Int. Cl.: H01M 50/502, H01M 50/509, H01M 10/0525, H01M 50/516, H01M 50/528, H01M 10/04, H01M 50/249, H01M 50/507, H01M 50/213, H01M 50/258, H01M 50/289, H01M 50/503, H01M 50/514, H01M 10/38, H01R 4/02

(54) **BATTERY CELL ASSEMBLY FOR A BATTERY MODULE OF A MODULAR BATTERY SYSTEM**

(30) Priority: 04.10.2022 NL 2033227
(71) Applicant: Storm Group B.V., 5708 JZ Helmond (NL)
(72) Inventor: VAN DIGGELEN, Bram Thomas, Helmond (NL)
(74) Representative: Dennemeyer & Associates S.A.

(57) **Abstract**

The disclosure relates to a battery cell assembly for a modular battery system. The assembly comprises an array of battery cells, and a plurality of separate connector arms electrically interconnecting the battery cells of the array. Each battery cell of the array includes a pole terminal being directly electrically connected to a pole terminal of at least one other battery cell of the array by a respective one of the plurality of separate connector arms. The plurality of separate connector arms are physically separate from one another. Each separate connector arm of the plurality of separate connector arms electrically connects at most two battery cells of the array with each other.

## Description

### FIELD

The invention generally relates to battery packs for storing power. The invention more particularly relates to modular battery packs for powering off-highway vehicles, such as construction vehicles.

### BACKGROUND

Battery systems for powering electric vehicles generally include a set battery cells, which are spatially arranged and electrically interconnected to provide the battery pack with a desired shape and power characteristics. Battery systems for powering electric passenger cars benefit from mass production, as their specifications are substantially uniform and their production numbers are large. For most other electrically powered machinery, however, the production numbers are relatively small, while the power and capacity requirements for such machinery greatly varies depending on the application. The production of battery systems for such machinery hence requires much adaption and customization.

Modular battery systems can provide design adaptability and scalability for many applications. A modular battery system includes a number of individual battery modules which are electrically connected to each other in a desired arrangement to collectively form a battery pack. Each battery module in turn holds a set of battery cells. By connecting the battery modules in series and/or parallel, a battery pack can be obtained having a desired capacity and output voltage.

The set of battery cells of a battery module are typically interconnected by one or more current collector plates. In such systems, each battery cell is connected to one or more of the current collector plates, wherein current collector plates provide the connection between the battery cells.

### SUMMARY

It is an object to propose an improved battery cell assembly and battery module for storing power, particularly for powering an electric drive, such as one or more electric motors, particularly of an electric vehicle. It is a particular object to provide a modular battery system for powering off-highway vehicles, such as construction vehicles. It is also a particular object to propose a assembly method for a battery cell assembly, particularly for a battery module such as for a modular battery system. In a more general sense it is an object to overcome or ameliorate at least one of the disadvantages of the prior art, or at least provide alternative processes and structures that are more effective than the prior art. At any rate it is at the very least aimed to offering a useful choice and contribution to the existing art.

According to an aspect, a battery cell assembly is provided, particularly for powering an electric drive of an electric vehicle. The battery cell assembly comprises an array of battery cells, and a plurality of connector arms electrically interconnecting the battery cells of the array. Each battery cell of the array includes a pole terminal being directly electrically connected to a pole terminal of at least one other battery cell of the array by a respective one of the plurality of connector arms. The plurality of connector arms are physically separate from one another. Each connector arm of the plurality of connector arms electrically connects at most two battery cells of the array with each other. Hence, the array of battery cells can be interconnected without having to use a current collector plate. This could decrease the overall size and weight of the battery cell assembly, and can furthermore provide more space for allowing battery cells of the array to vent in case of a battery cell failure. Current collector plates may cover a substantial amount the cell array, and can block battery cell venting. By directly connecting battery cells to each other using the individual connector arms, the coverage of the battery cells may be minimized.

The battery cell array may accordingly comprise a first battery cell having a first pole terminal, and a second battery cell having a second pole terminal, wherein the first pole terminal and the second pole terminal are directly electrically connected to each other by a respective one the plurality of separate connector arms. The first battery cell may for example comprise a first positive pole terminal and a first negative pole terminal, and the second battery cell may comprise a second positive pole terminal and a second negative pole terminal, wherein one, e.g. only one, of the first positive or first negative pole terminal is electrically connected to one, e.g. only one, of the second positive or second negative pole terminal.

It will be appreciated that each separate connector arm may define an electrically conductive path, particularly an unbranched electrically conductive path, which extends directly between a pole terminal of one battery cell of the array and a pole terminal of another, e.g. adjacent, battery cell of the array. The electrically conductive path may for example extend between a positive pole terminal of one battery cell of the array, to a positive pole terminal of another battery cell of the array.

The array of battery cell may be held by an array holder. The array holder may be arranged to retain the cells of the array in a fixed predetermined arrangement relative to each other.

Optionally, each separate connector arm of the plurality of separate connector arms is formed by a single bonding wire. Battery cells may hence be connected to each other by wired connections, providing a reliable and easily adaptable connection. It will be appreciated that a bonding wire encompasses various electrically conductive threads and strands, including bonding ribbons, and bonding fibers, and the like.

Optionally, each single bonding wire is wire-bonded at an end thereof to a pole terminal of a battery cell of the array and at an opposite end thereof to a pole terminal of another battery cell of the array. A bonding wire, e.g. a bonding ribbon, may be attached to a pole terminal, for example, by means of ultrasonic or laser welding.

Optionally, each battery cell of the array includes a positive pole terminal and a negative pole terminal, and wherein the plurality of separate connector arms includes a plurality of separate parallel connector arms directly electrically connecting one of the positive or negative pole terminal of a battery cell of the array with a same one of the positive or negative pole terminal of another battery cell of the array. Additionally or alternately, each battery cell of the array optionally includes a plurality of separate serial connector arms directly electrically connecting one of the positive or negative pole terminal of a battery cell of the array with a different one of the positive or negative pole terminal of another battery cell of the array. Hence, the battery cells in the array can be connected in series and/or in parallel by accordingly connecting pole terminals directly with each other using the plurality of separate connector arms. The serial connector arms may have substantially equal lengths. Also, the parallel connector arms may have substantially equal lengths. The serial connector arms may have the same length as the parallel connector arms.

Optionally, each battery cell of the array has a cylindrically shaped battery cell body extending in a longitudinal axis between a bottom face and a top face of the battery cell body, and wherein the battery cells are so arranged in the array that the longitudinal axes extend parallel to one another. The cylindrically shaped battery cells are relatively mechanically rigid, and can contribute to the overall structural rigidity of the battery pack. Cylindrical battery cells can also be effectively arranged in an array, e.g. in rows and columns.

Optionally, the pole terminals of each battery cell of the array are at the top face of the cylindrically shaped battery cell body. This for example allows the battery cells to be cooled at a bottom side, opposite the top side, of the array.

Optionally, the battery cells of the array are so arranged that the pole terminals of each battery cell are at the same face of the array, particularly a top face of the array. Hence, the pole terminals are easily accessible, which facilitates the connecting of pole terminals of different cells with each other. It may also minimize the special difference between the pole terminals of different batteries, thus requiring relatively short connector arms.

Optionally, the plurality of separate connector arms are noncrossing. Hence, a risk of short-circuiting, when two connector arms make contact, is reduced.

Optionally, the battery cells of the array are arranged in staggered rows. The battery cells may be arranged in rows along a first direction of the array, wherein the rows are shifted with respect to each other in the first direction. Columns of the array may be formed in the second direction, transverse to the first direction.

Optionally, each battery cell of a row is at least directly electrically connected to an adjacent battery cell within the same row of the array by a respective one of the plurality of separate connector arms.

Optionally, the battery cells within the same row of the array are connected to each other in parallel. Hence, the same pole terminals of the battery cells in a single row, e.g. either all the positive or all the negative pole terminals of the cells in the row, may be connected to each other.

Optionally, each battery cell of a row is directly electrically connected with its positive pole terminal to a positive pole terminal of an adjacent battery cell within the same row.

Optionally, each battery cell of the array is at least directly electrically connected to a another battery cell within an adjacent row of the array by a respective one of the plurality of separate connector arms.

Optionally, the battery cells within a different row of the array are connected to each other in series. Hence, the battery cells in each column may be connected in parallel.

Optionally, the array of battery cells includes first edge battery cells which are arranged at a first edge section of the array, and wherein each first edge battery cell is connected to a busbar by a respective one of the plurality of separate connector arms. Battery cells at an edge of the array may be connected externally, for example to a busbar. The busbar may be connected to a main terminal of the battery system. The battery system may include two busbars, e.g. a first busbar and a second busbar. The first busbar may be a positive busbar, and the second busbar may be a negative busbar. The first and second busbars may be arranged on opposite lateral sides of the array. The array may also comprise two first edge sections, e.g. a first first edge section and a second first edge section. Each first edge section may be associated with a respective one of the busbars. The battery cells at the first first edge section of the array may be connected with their positive pole terminal to the first busbar, e.g. the positive busbar. Similarly, the battery cells at the second first edge section of the array may be connected with their negative pole terminal to the second busbar, e.g. the negative busbar. Each busbar may extend in the first direction, e.g. parallel to the rows of the array.

Optionally, the array of battery cells includes second edge battery cells which are arranged at a second edge section of the array, and wherein each second edge battery cell is connected to a controller interface board for interfacing with a controller by a respective one of the plurality of separate connector arms.

Optionally, the array of battery cells includes third edge battery cells which are arranged at a third edge section of the array, and wherein each third edge battery cell is connected to an interconnector board for electrically connecting the array of battery cells to a further array of battery cells by a respective one of the plurality of separate connector arms. A battery module may for example include multiple arrays of battery cells, which are interconnected by means of the connector board.

According to an aspect, a battery module for modular battery system is provided. The battery module comprises a module housing and a battery cell assembly as described herein housed by the module housing.

According to an aspect, a battery module for modular battery system is provided. The battery module comprises a module housing, a first battery cell assembly as described herein housed by the module housing, and a second battery cell assembly as described herein housed by the module housing. The battery cell of the first assembly may be held by a first array holder, and the battery cell of the second assembly may be held by a second, separate, battery cell holder. Each array holder may be arranged to retain the cells of it respective array in a fixed predetermined arrangement.

Optionally, the battery module comprises an interconnector board arranged for electrically connecting the first battery cell assembly and the second battery cell assembly to each other, wherein the interconnector board on a first hand is electrically connected to battery cells of the first assembly by a respective one of the plurality of separate connector arms of the first assembly, and on a second hand is electrically connected to battery cells of the second assembly by a respective one of the plurality of separate connector arms of the second assembly.

Hence, according to the aspect, the battery module may comprise:
a first array of battery cells held by a first array holder and housed in the module housing, and a first plurality of separate connector arms electrically interconnecting the battery cells of the first array, wherein each battery cell of the first array includes a pole terminal being directly electrically connected to a pole terminal of at least one other battery cell of the first array by a respective one of the first plurality of separate connector arms, wherein the plurality of first separate connector arms are physically separate from one another, and each separate connector arm electrically connects at most two battery cells with each other;
a second array held by a second array holder and housed in the module housing, and a second plurality of separate connector arms electrically interconnecting the battery cells of the second array, wherein each battery cell of the second array includes a pole terminal being directly electrically connected to a pole terminal of at least one other battery cell of the second array by a respective one of the second plurality of separate connector arms, wherein the plurality of second separate connector arms are physically separate from one another, and each separate connector arm electrically connects at most two battery cells with each other; and
an array interconnector board arranged for electrically connecting the first battery cell array and the second battery cell array to each other, wherein the array interconnector board on a first hand is electrically connected to battery cells of the first array by a respective one of the first plurality of separate connector arms, and on a second hand is electrically connected to battery cells of the second array by a respective one of the plurality of second separate connector arms.

According to a another aspect, a battery pack for a modular battery system is provided, comprising a pack housing and a plurality of electrically interconnected battery modules as described herein.

According to a further aspect, a method is provided for interconnecting battery cells of a battery cell array for a battery cell assembly such as described herein. The method comprises providing a plurality of separate connector arms for electrically interconnecting the battery cells of the array, each connector arm being arranged for electrically connecting at most two battery cells of the array with each other; and for each battery cell of the array, directly electrically connecting a pole terminal of the battery cell to a pole terminal of at least one other battery cell of the array by attaching a respective one of the plurality of separate connector arms to the battery cell pole terminal and to the at least one other battery cell pole terminal.

Optionally, each battery cell of the array includes a positive pole terminal and a negative pole terminal, and the plurality of separate connector arms comprises a plurality of separate serial connector arms and a plurality of separate parallel connector arms, wherein the method comprises, for each separate parallel connector arm, attaching the parallel connector arm to the positive or negative pole terminal of a battery cell of the array and to a same one of the positive or negative pole terminal of another battery cell of the array; and/or for each separate serial connector arm, attaching the serial connector arm to the positive or negative pole terminal of a battery cell of the array and to a different one of the positive or negative pole terminal of another battery cell of the array.

Optionally, the method comprises, for each battery cell of the array, using a camera, automatically determining a first position of a pole terminal of a the battery cell; using the camera, automatically determining a second position of a pole terminal of another battery cell of the array, and attaching one of the separate connector arms with a first end thereof to the pole terminal of the battery cell at the determined first position, and
attaching said separate connector arm with a second, opposite, end thereof to the pole terminal of the other battery cell at the determined second position.

Optionally, the plurality of separate connector arms are individually attached to the battery cells of the array in succession to each other.

Optionally, each separate connector arm of the plurality of separate connector arms is formed by a single bonding wire.

Optionally, the wire bonding comprises welding, particularly ultrasonically welding, a respective one of the plurality of separate connector arms to the battery cell pole terminal and to the at least one other battery cell pole terminal.

According to an aspect, a vehicle is provided, particularly a construction vehicle, comprising a battery cell assembly as described herein, or a battery module or battery pack as described herein.

It will be appreciated that any of the aspects, features and options described herein can be combined. It will particularly be appreciated that any of the aspects, features and options described in view of the battery cell assembly apply equally to the battery module and the battery pack, and vice versa. It will also be appreciated that any of the aspects, features and options described in view of the battery cell assembly apply, battery module and battery pack apply equally to the method, and vice versa.

### BRIEF DESCRIPTION OF THE DRAWINGS

Embodiments of the present invention will now be described in detail with reference to the accompanying drawings in which:
Figures 1-4 show a schematic example of a battery cell assembly; and
Figure 5 shows a schematic example of a battery module;
Figure 6 shows a schematic example of a battery pack.

### DETAILED DESCRIPTION

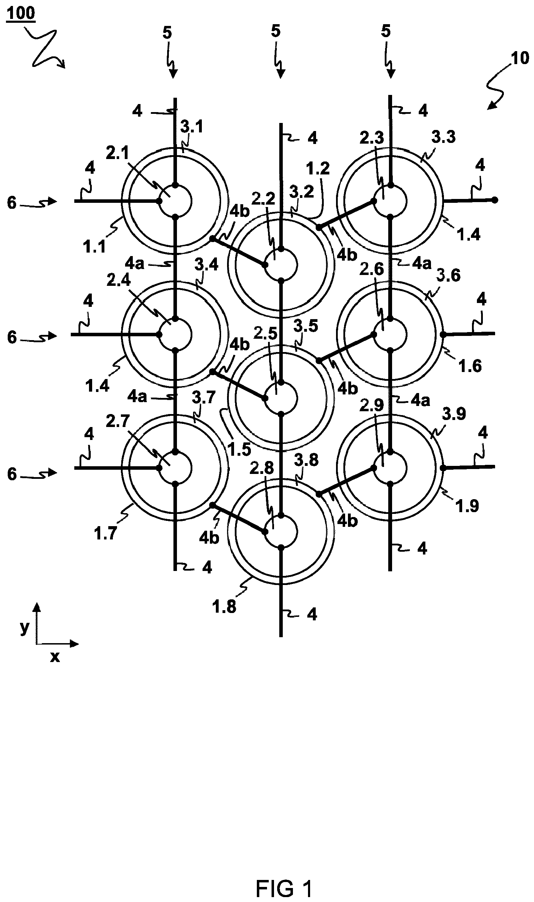

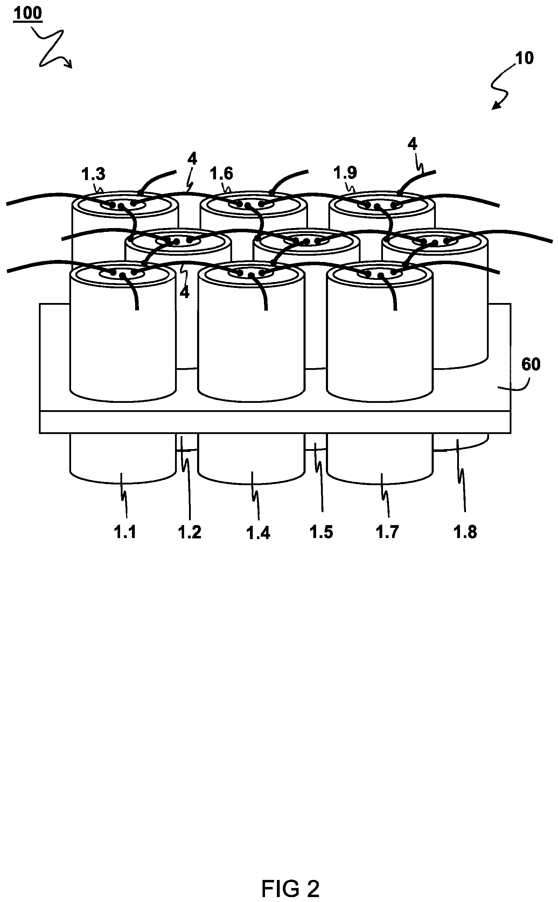

Figures 1-4 schematically show a battery cell assembly 100, comprising a battery cell array 10 comprising a plurality of battery cells 1.i. The battery cell assembly 100 may be part of a battery module for a modular battery system. Figures 1, 3 and 4 show a plan view of the assembly 100 and figure 2 shows a perspective view of the assembly 100. The battery cells 1.i of the array 10 have a cylindrically shaped battery body in this example, with a circular cross section, which extends between a top face and a bottom face. Here, each battery cell 1.i comprises at its respective top face a positive pole terminal 2.i and a negative pole terminal 3.i of the battery cell 1.i. The positive pole terminal 2.i is in this example at a central portion of the top face, while the negative pole terminal 3.i is at a circumferential portion of the top face. The bottom face, opposite the top face, is free from pole terminals, and can for example be accessible for cooling the battery cells in use. The battery cells 1.i may for example be supported by a cool plate in thermal contact with the bottom face for cooling the array of battery cells 1.i. The battery cells 1.i may be selected from various standard dimensioned cells available on the market, such as a 21700, 18650 battery cell, or other.

The battery cells 1.i are arranged in rows 5 along a first direction of the array 10, here the y-direction. The rows 5 are staggered with respect to each other. This provides a spatially efficient arrangement of the battery cells 1.i, but also provides for efficient interconnection of the battery cells 1.i. Columns of battery cells 1.i may be defined in a second direction, transverse to the first direction, here the x-direction. The array 10 in this example is shown to include three columns 6, each including three battery cells 1.i. In this example, the battery cell array 10 is shown to include nine battery cells 1.1-1.9, but it will be appreciated that the battery cell array 10 may include any number of battery cells 1.i. The battery cells 1.1-1.9 are in this example arranged in three parallel rows 5.1-5.3, each including three battery cells. The battery cells 1.i of the array 10 may be held by an array holder 60, as schematically shown in figure 2. The array holder 60 may be configured to retain the battery cells 1.i of the array 10 in a fixed configuration with respect to each other.

The battery cells 1.i of the array 10 are electrically interconnected by a plurality of separate connector arms 4. The connector arms of the plurality of connector arms 4 are physically separate from one another. Each connector arm 4 of the plurality of connector arms 4 connects at most 2 battery cells with each other. Each connector arm particularly connects at most two pole terminals with each other. Each connector arm 4 defines an electrically conductive path, particularly a nonbranching path, that extends between a first end and a second end. The first and second end attach to pole terminals of two respective battery cells of the array 10, hence electrically connecting at most two battery cells with each other. Each connector arm particularly connects two adjacent battery cells with one another, hence minimising the extent of the connector arms. The connector arms 4 may particularly be noncrossing, to minimise the risk of the connector arms contacting each other and creating unwanted short-circuits. In this example, each of the connector arms 4 is formed by a single bonding wire. This provides an easily adaptable way of interconnecting the battery cell array 10. Here, the bonding wires have a circular cross-section, but it will be appreciated that the bonding wires may have alternatively shaped cross-sections, such as rectangular. It will also be appreciated that the bonding wires of the assembly may differ from one another in cross-sectional shape.

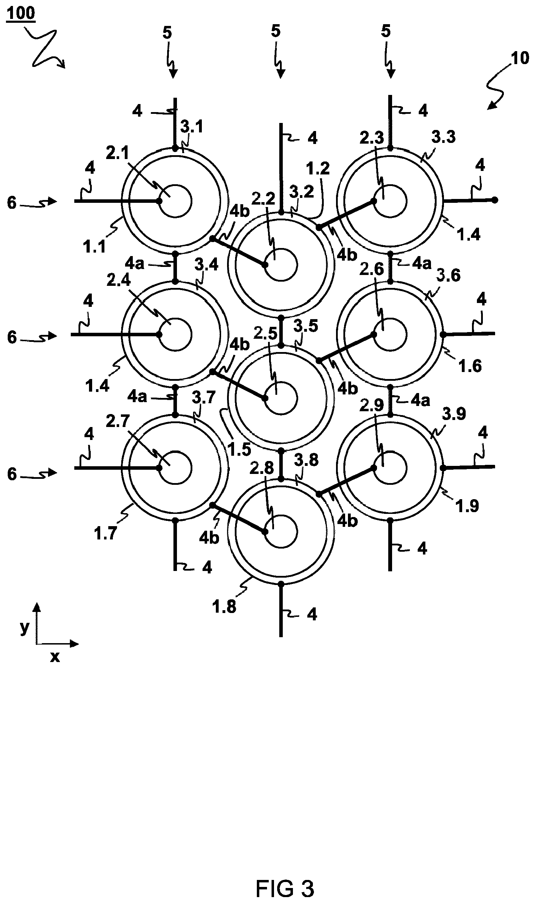

The plurality of separate connector arms 4 includes parallel connector arms 4a connecting two battery cells 1.i in parallel, and serial connector arms 4b connecting two battery cells 1.i in series. The parallel and serial connector arms 4 can collectively interconnect the battery cells 1.i of the array 10 in a desired circuit. The parallel connector arms 4a connect pole terminals of equal polarity with each other. The parallel connector arms are in this example attached, e.g. with one end thereof, to the positive pole terminal 2.i of a battery cell 1.i and, e.g. with an opposite end thereof, to the positive pole terminal 2.i of another battery cell 2.i of the array 10. It will be appreciated that, alternatively, the parallel connector arms could be attached, e.g. with one end thereof, to the negative pole terminal 3.i of a battery cell 1.i and, e.g. with an opposite end thereof, to the negative pole terminal 3.i of another battery cell 2.i of the array 10. In these examples, the battery cells 1.i within the same row 5 are connected to each other in parallel, by means of the parallel connector arms. In the example of figure 1, the parallel connector arms 4a connect the positive pole terminals 2.i of the battery cells in a row 5 with each other, whereas in the example of figure 3, the parallel connector arms 4a connect the negative pole terminals 3.i of the battery cells in a row 5 with each other.

The serial connector arms 4b connect pole terminals of opposite polarity with each other. The serial connector arms are attached, e.g. with one end thereof, to the positive pole terminal 2.i of a battery cell 1.i and, e.g. with an opposite end thereof, to the negative pole terminal 3.i of another battery cell 2.i of the array 10, or vice versa. In this example, the battery cells 1.i of different rows are connected to each other in series. The battery cells 1.i of different columns are connected to each other in parallel.

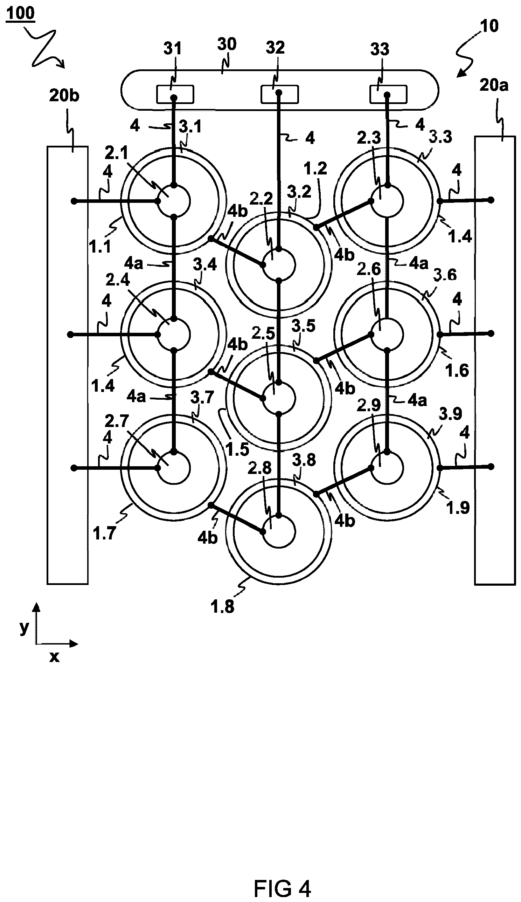

Figure 4 shows a schematic example of a battery cell assembly 100, similar to the assembly as shown in figures 1. Here, the battery cell assembly 100 comprises a busbar 20, particularly a first busbar 20a and a second busbar 20b. The busbars 20a, 20b are arranged on opposite side of the array 10, and, here, extend in the y-direction parallel to the rows 5 of the array 10. Battery cells 1.i at a first edge section of the array, in this example battery cells 1.1, 1.3, 1.4, 1.6, 1.7, 1.9, are connected to either one of the busbars 20a, 20b. Here, the battery cells 1.1, 1.4, 1.7 are connected to the second busbar 20b, and the battery cells 1.3, 1.6, 1.9 are connected to the first busbar 20a. Here, the battery cells 1.1, 1.4, 1.7 being connected to the second busbar 20b, and the cells 1.3, 1.6, 1.9 being connected to the first busbar 20a, are arranged on an opposite edges of the array 10. Here, all battery cells 1.1, 1.4, 1.7 connected to the second busbar are arranged in a single row 5 of the array 10. Also, here, all battery cells 1.3, 1.6, 1.9 connected to the first busbar are arranged in, another, single row 5 of the array 10.

Each battery cell 1.i at the first edge section of the array 10 is electrically connected to either one of the busbars 20a, 20b by a respective one of the connector arms 4. In this example, each battery cell 1.1, 1.4. 1.7 is connected with its positive pole terminal to the second busbar 20b, by means of a respective one of the connector arms 4, and each battery cell 1.3, 1.6. 1.9 is connected with its positive pole terminal to the first busbar 20b, by means of a respective one of the connector arms 4.

The busbars 20a, 20b may be connected to a main connector terminal of a battery module, for connection to a load or a charging station. The busbars 20a, 20b can be used to collect electric power from the battery cells 1.i, e.g. for powering an electric vehicle, and to collect electric power from a charger for (re)charging the battery cells.

The assembly 100 in this example also comprises a controller interface board 30 for interfacing with a controller. The controller may for example be arranged for controlling the battery cell array, e.g. controlling its temperature, power output and input, etc.. Battery cells 1.i at a second edge section of the array, here battery cells 1.1, 1.2, 1.3, are connected to the controller interface board 30 by a respective one of the plurality of separate connector arms. The controller interface board 30 may include contact zones 31, 32, 33 for attaching a contact arm 4 thereto. Here, the positive pole terminals 3.1, 3.2, 3.3 are connected to the controller interface board 30, at the respective contact zones 31, 32, 33, but it will be appreciated that in an alternative configuration the negative pole terminals 2.1, 2.2, 2.3 may be connected to the controller interface board 30, or a combination of positive and negative terminals of the second edge battery cells 1.1, 1.2, 1.3. The first edge section and the second edge section may partly overlap. In other words, some battery cells 1.i may be electrically connected to both the controller interface board 30 and a busbar 20. In this example battery cells 1.1 and 1.3 are both connected to the controller interface board 30 and to a respective busbar 20b, 20a. The controller interface board 30 may optionally be connected to any of the busbars 20a, 20b, e.g. via a connector arm 4.

The assembly 100 may also include an array interconnector board 40 for interconnecting two or more arrays with each other. Battery cells 1.i at a third edge section of the array 10, here battery cells 1.7, 1.8, 1.9, may be connected to the interconnector board 40 by a respective one of the plurality of connector arms 4.

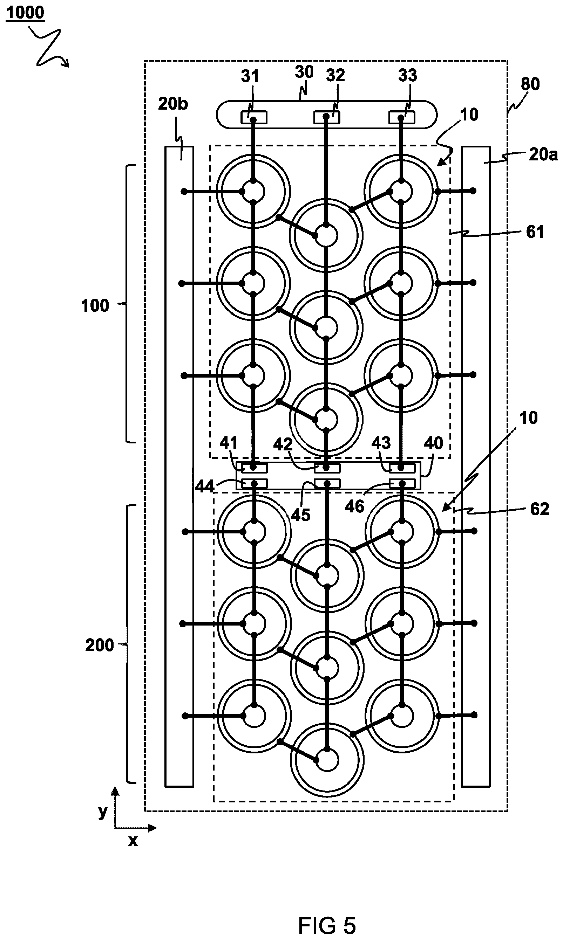

Figure 5 shows an example of battery module 1000 for a modular battery system. The module 1000 comprises a first assembly 100 similar to as shown in figures 1-3, and a second assembly 200 similar to the first assembly 100. It will be appreciated that the module 1000 may also include only one battery cell assembly 100, or more than two battery cell assemblies. The first assembly 100 and the second assembly 200 are here housed by a module housing 80 of the battery module 1000. One or more battery modules 100 may be connected together to form a battery pack. The battery pack may for example include a pack housing, housing the interconnected battery modules 1000, and a main terminal for being connected to a load or charging station.

The first assembly 100 includes a first array holder 61, e.g. as shown in figure 2, holding the battery cell array 10 of the first assembly 100. The second battery assembly 200 includes a second array holder 62, e.g. as shown in figure 2, holding the battery cell array 10 of the second assembly 200. Hence, here, each array is held by a separate array holder, allowing fore easy assembly and adaptability of the battery module. In particular, each battery cell array may be substantially identical. This way, a standard battery cell array can be defined. This also allows the design of a standard array holder for the standard battery cell array. The arrangement of the battery cells 1.i in the array 10 may for example be identical across all arrays 10 of the module 1000.

The battery cell array 10 of the first assembly 100 and the battery cell array 10 of the second assembly 200 are connected to each other via the array interconnector board 40. The array interconnector board 40 here includes contact zones 41-46, for attaching a connector arm 4 thereto. The interconnector board 40 may optionally be connected to any of the busbars 20a, 20b, e.g. via a connector arm 4. Battery cells 1.i at respective third edge sections of the arrays may be connected to the interconnector board 40 by a connector arm 4. Also, the first assembly 100 and the second assembly 200 share two common busbars 20a, 20b. Here, battery cells 1.i at respective second edge sections of the arrays may be connected to either one of the busbars 20a, 20b, by a connector arm 4. Here, only one of the arrays, particularly the array of the first assembly 100, is connected to the controller interface board 30.

The battery module 1000 may be expanded by adding more battery cell assemblies, for example by extending the module in the y-direction with addition of another array of battery cells, connected to the array of the second assembly 200 via a further array interconnector board. Also, the battery module 1000 can be expanded in the x-direction, e.g. by adapting the number of rows 5 of battery cells of the array.

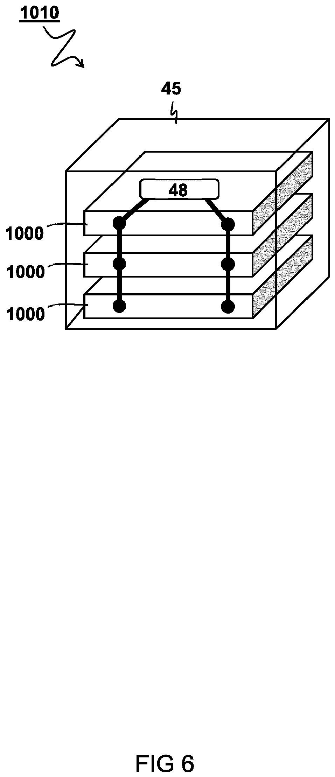

Figure 6 shows a schematic example of a modular battery pack 1010, including multiple interconnected battery modules 1000. The battery pack 1010 includes, here, a pack housing 45, housing the interconnected battery modules 1000. A pack terminal 48 is provided for electrically connecting the battery pack 1010 to a load, or charger.

Herein, the invention is described with reference to specific examples of embodiments of the invention. It will, however, be evident that various modifications and changes may be made therein, without departing from the essence of the invention. For the purpose of clarity and a concise description features are described herein as part of the same or separate embodiments, however, alternative embodiments having combinations of all or some of the features described in these separate embodiments are also envisaged.

However, other modifications, variations, and alternatives are also possible. The specifications, drawings and examples are, accordingly, to be regarded in an illustrative sense rather than in a restrictive sense.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean `at least one', and do not exclude a plurality. The mere fact that certain measures are recited in mutually different claims does not indicate that a combination of these measures cannot be used to an advantage.

## Claims

1. Battery cell assembly for a battery system for powering an electric motor, comprising an array of battery cells, and a plurality of connector arms electrically interconnecting the battery cells of the array,
wherein each battery cell of the array includes a pole terminal being directly electrically connected to a pole terminal of at least one other battery cell of the array by a respective one of the plurality of connector arms,
wherein the plurality of connector arms are physically separate from one another, and each connector arm electrically connects at most two battery cells with each other.

2. Assembly of claim 1, wherein each connector arm of the plurality of connector arms is formed by a single bonding wire.

3. Assembly of claim 1 or 2, wherein each single bonding wire is wire bonded at an end thereof to a pole terminal of a battery cell of the array and at an opposite end thereof to a pole terminal of another battery cell of the array.

4. Assembly of any preceding claim, wherein each battery cell of the array includes a positive pole terminal and a negative pole terminal, and wherein the plurality of connector arms includes a plurality of parallel connector arms directly electrically connecting one of the positive or negative pole terminal of a battery cell of the array with a same one of the positive or negative pole terminal of another battery cell of the array, and/or a plurality of serial connector arms directly electrically connecting one of the positive or negative pole terminal of a battery cell of the array with a different one of the positive or negative pole terminal of another battery cell of the array.

5. Assembly of any preceding claim, wherein each battery cell of the array has a cylindrically shaped battery cell body extending in a longitudinal axis between a bottom face and a top face of the battery cell body, and wherein the battery cells are so arranged in the array that the longitudinal axes extend parallel to one another.

6. Assembly of claim 5, wherein the pole terminals of each battery cell of the array are at the top face of the cylindrically shaped battery cell body.

7. Assembly of any preceding claim, wherein the battery cells of the array are so arranged that the pole terminals of each battery cell are at the same face of the array, particularly a top face of the array.

8. Assembly of any preceding claim, wherein the plurality of connector arms are noncrossing.

9. Assembly of any preceding claim, wherein the battery cells of the array are arranged in staggered rows.

10. Assembly of claim 9, wherein each battery cell of a row is at least directly electrically connected to an adjacent battery cell within the same row of the array by a respective one of the plurality of connector arms.

11. Assembly of claim 9 or 10, wherein the battery cells within the same row of the array are connected to each other in parallel.

12. Assembly of any of claims 9-11, wherein each battery cell of a row is directly electrically connected with its positive pole terminal to a positive pole terminal of an adjacent battery cell within the same row.

13. Assembly of any of claims 9-12, wherein each battery cell of the array is at least directly electrically connected to a another battery cell within an adjacent row of the array by a respective one of the plurality of connector arms.

14. Assembly of claim 13, wherein the battery cells within a different row of the array are connected to each other in series.

15. Assembly of any preceding claim, wherein the array of battery cells includes first edge battery cells which are arranged at a first edge section of the array, and wherein each first edge battery cell is connected to a busbar by a respective one of the plurality of connector arms.

16. Assembly of any preceding claim, wherein the array of battery cells includes second edge battery cells which are arranged at a second edge section of the array, and wherein each second edge battery cell is connected to a controller interface board for interfacing with a controller by a respective one of the plurality of separate connector arms.

17. Assembly of any preceding claim, wherein the array of battery cells includes third edge battery cells which are arranged at a third edge section of the array, and wherein each third edge battery cell is connected to an interconnector board for electrically connecting the array of battery cells to a further array of battery cells by a respective one of the plurality of separate connector arms.

18. Battery module for modular battery system, comprising
a module housing and a first battery cell assembly according to any preceding claim housed by the module housing.

19. Battery module of claim 18, comprising a second battery cell assembly according to any of claims 1-17, and an interconnector board arranged for electrically connecting the first battery cell assembly and the second battery cell assembly to each other, wherein the interconnector board on a first hand is electrically connected to battery cells of the first assembly by a respective one of the plurality of separate connector arms of the first assembly, and on a second hand is electrically connected to battery cells of the second assembly by a respective one of the plurality of separate connector arms of the second assembly.

20. Battery pack for a modular battery system, comprising a pack housing and a plurality of electrically interconnected battery modules according to claim 18 or 19 housed by the pack housing.

21. Method for interconnecting battery cells of a battery cell array for a battery cell assembly such as of any of claims 1-17, the method comprising:
providing a plurality of separate connector arms for electrically interconnecting the battery cells of the array, each connector arm being arranged for electrically connecting at most two battery cells of the array with each other; and
for each battery cell of the array, directly electrically connecting a pole terminal of the battery cell to a pole terminal of at least one other battery cell of the array by attaching a respective one of the plurality of separate connector arms to the battery cell pole terminal and to the at least one other battery cell pole terminal.

22. Method of claim 21, wherein each battery cell of the array includes a positive pole terminal and a negative pole terminal, and the plurality of separate connector arms comprises a plurality of separate serial connector arms and a plurality of separate parallel connector arms, wherein the method comprises:
for each separate parallel connector arm, attaching the parallel connector arm to the positive or negative pole terminal of a battery cell of the array and to a same one of the positive or negative pole terminal of another battery cell of the array; and/or
for each separate serial connector arm, attaching the serial connector arm to the positive or negative pole terminal of a battery cell of the array and to a different one of the positive or negative pole terminal of another battery cell of the array.

23. Method of claim 21 or 22, comprising, for each battery cell of the array:
using a camera, automatically determining a first position of a pole terminal of a the battery cell,
using the camera, automatically determining a second position of a pole terminal of another battery cell of the array, and
attaching one of the separate connector arms with a first end thereof to the pole terminal of the battery cell at the determined first position, and
attaching said separate connector arm with a second, opposite, end thereof to the pole terminal of the other battery cell at the determined second position.

24. Method of any of claims 21-23, wherein the plurality of separate connector arms are individually attached to the battery cells of the array in succession to each other.

25. Method of any of claims 21-24, wherein each separate connector arm of the plurality of separate connector arms is formed by a single bonding wire.

26. Method of claim 25, wherein the wire bonding comprises welding, a respective one of the plurality of separate connector arms to the battery cell pole terminal and to the at least one other battery cell pole terminal.
